# EUROPEAN PATENT APPLICATION

(11) **EP 3 257 761 A1**
(43) Date of publication of application: **20.12.2017**
(21) Application number: 17173182.1
(22) Date of filing: 29.05.2017
(51) Int. Cl.: B65B 19/34, B29C 65/00, B65B 35/40, B65B 35/46, B65B 51/16, B65G 29/00, B65B 9/02, B65B 59/04, B65B 29/00

(54) **MACHINE AND PACKAGING METHOD**

(30) Priority: 16.06.2016 IT UA20164433
(71) Applicant: SONZOGNI CAMME S.P.A., 24045 Fara Gera d'Adda, Bergamo (IT)
(72) Inventor: SPOTTI, Alberto, 24047 Treviglio, Bergamo (IT)
(74) Representative: Eterno, Enrico

(57) **Abstract**

Packaging machine (1) comprising a frame (2) and a coupling drum (4), mounted rotatable to said frame and defining a drum surface (6) on which ribbons of material (F1, F2) converge for the containment of articles (A) to be packaged; a feed drum (8, 8') of the coupling drum (4), revolving and defining article seats (10) to which the articles (A) are associable; and a first welding roller (12), comprising contact ribs (14) with the surface of the drum (6), distributed around the roller (12) to make transverse welding lines (18) between the ribbons of material (F1, F2).

Adjacent contact ribs (14) identify a roller channel (16) in which the ribbons of material (F1, F2) form an article-holder pocket (20) between transversal welding lines (18). The feed drum (8, 8') comprises mobile push elements (22) to move the articles (A) from the article seats (10) superposed respect to the drum surface (6) and in the roller channels (16), at right angles to a feed direction (Al, A2) of the ribbons (F1, F2).

The invention also relates to a packaging method.

## Description

The present invention relates to a machine for packaging articles, and a packaging method preferably but not exclusively implemented using such a machine.

In the packaging field, several technical solutions have been developed for enclosing different products into corresponding wrappings.

A specific solution among the many contemplates that, in packaging, the products are transported along a predetermined path supported by handling chains. In this way, a pair of films forming the wrapping is approached and welded on opposite surfaces of the products thus transported, so as to enclose them.

One of the main drawbacks of the prior art is that the transport by chains requires a considerable distance between subsequent products, and thus involves the consumption of the materials of the wrapping. This clearly involves higher production costs.

There is also to be considered that the positioning of the films along the travel direction of the chains helps to increase the overall size of the devices of this type.

The present invention therefore relates to the context above, proposing to provide a machine and a method for packaging articles in which the pitch between adjacent articles can be dramatically reduced, by virtue of the lateral arrangement of the feeder of such articles.

This object is achieved by a machine according to claim 1 and by a method according to claim 18. The dependent claims describe preferred embodiments.

The object of the present invention will now be described in detail, with the aid of the accompanying drawings, provided by way of non-limiting example, in which:
- figure 1 shows a perspective view of a machine according to the present invention, according to a possible embodiment;
- figures 2 and 3 show a perspective view and a lateral view, respectively, of a zone of the machine in figure 1, in orthogonal section with respect to the first rotation axis R1;
- figures 3A, 3B show plan views of the ribbons of material at and in the direction of arrows IIIA and IIIB indicated in figure 3;

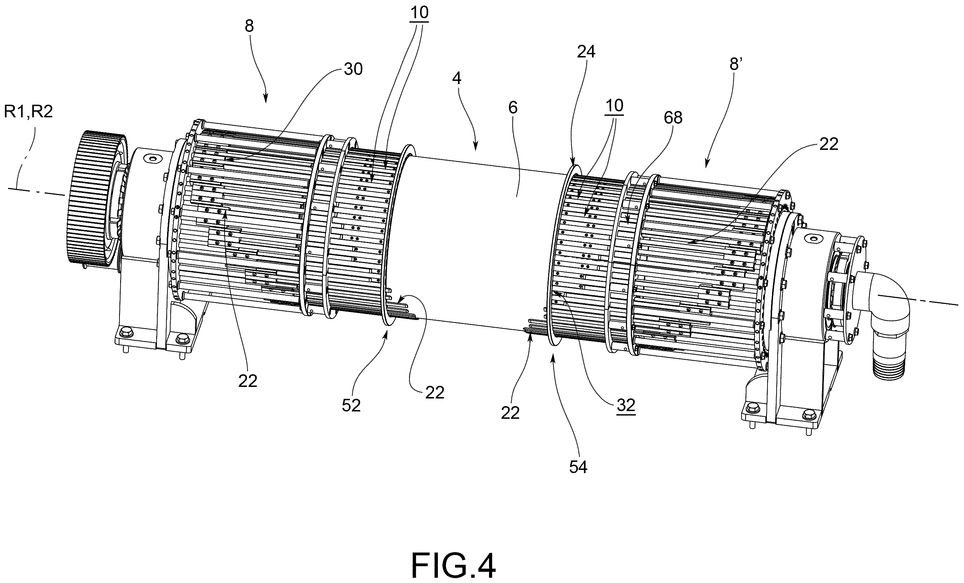

- figures 4, 5, 6 show perspective views of a coupling drum and a pair of feed drums, according to a possible variant of the machine, where the mobile push elements on the right side have been omitted in figure 5 to show the underlying cam path, and in which figure 6 is an enlargement of the right side of figure 4 or figure 5.

With reference to the drawings above, reference numeral 1 denotes, as a whole, a machine for packaging articles A.

By way of non-limiting example, such articles may be thin and elongated in shape, for example disposable sticks for beverages. The machine and the following method may however be used with products of a different type from the one shown for illustrative purposes only.

Such a machine 1 comprises a frame 2 and a coupling drum 4, the latter mounted rotatable to frame 2 around a first rotation axis R1 and defining a drum surface 6 on which ribbons of material F1, F2 converge for the containment of the articles A to be packaged.

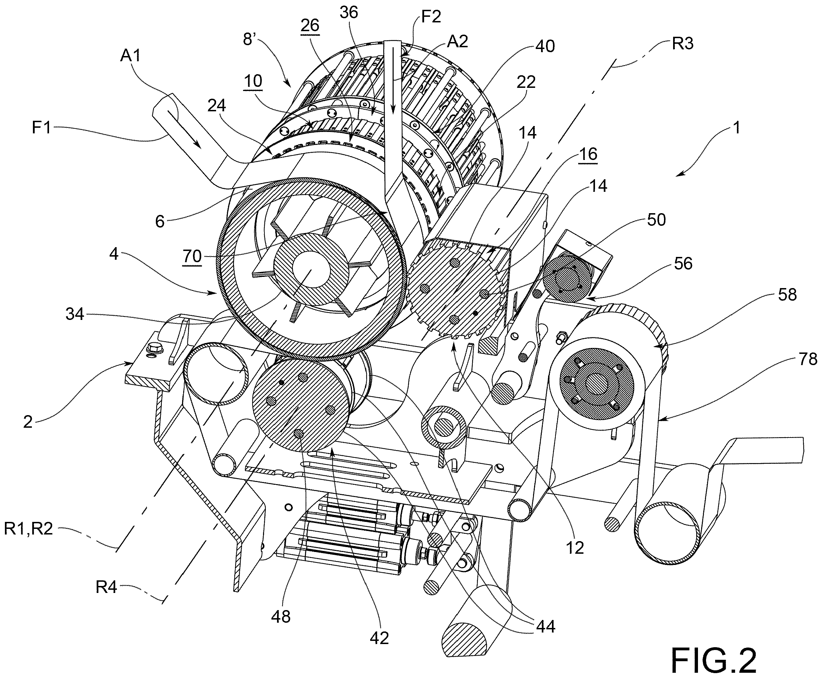

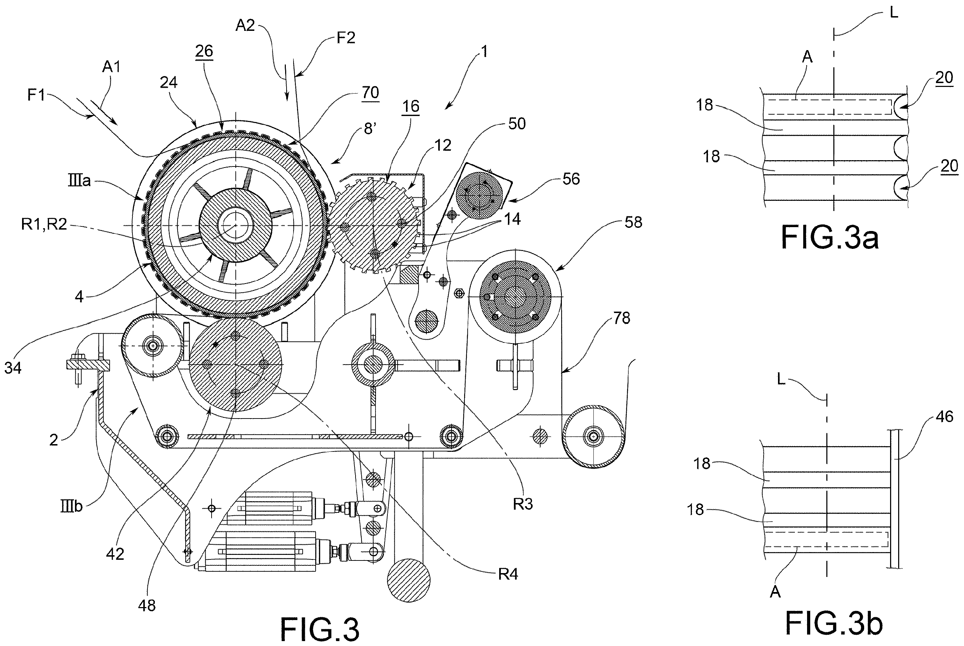

Specifically, such ribbons of material are fed along respective feeding directions A1, A2 for example shown in figure 2 and 3. In this regard, the ribbons of material F1, F2 may be fed by respective feeding reels (not shown) associated to frame 2.

For example, one or both ribbons of material may include at least one thermo-plastic or thermo-melting layer or film.

According to one embodiment, the drum surface 6 at least partially consists of natural or synthetic rubber, or silicone.

The packaging machine 1 further comprises at least one feed drum 8, 8' of the coupling drum 4, revolving around a second rotation axis R2 and defining article seats 10 to which articles A are associable.

The function of the feed drum 8, 8' is therefore to provide to the supply of articles A to the coupling drum.

Advantageously, articles A are placed at the article seats 10 in a direction substantially tangential with respect to an outer surface 68 of the feed drum 8, 8', such as through a falling chute (not shown).

Optionally, the article seats 10 are encased or lowered with respect to the surfaces surrounding them.

According to a variant, the packaging machine 1 comprises air-suction means which communicate with one or more article seats 10 through at least one suction hole 32 of such one or more seats, so as to retain articles A by suction.

According to a further variant, the air-suction means comprise a mechanical suction unit or a vacuum source.

According to an even further variant, the air-suction means comprise an inner cavity of a rotating shaft 34 of the feed drum 8, 8' around the second rotation axis R2.

In the embodiment shown, the first rotation axis R1 and the second rotation axis R2 are parallel and substantially coincident.

According to a further embodiment, the feed drum 8, 8' and the coupling drum 4 are integral in rotation around the respective axes R1, R2.

The variants shown depict a machine 1 comprising a pair of feed drums 8, 8' arranged at opposite axial ends 52, 54 of the coupling drum 4.

The packaging machine 1 further comprises a first welding roller 12 (specifically: rotatable around a third rotation axis R3), comprising contact ribs 14 with the drum surface 6, the latter being distributed around such a roller 12 to make transverse welding lines 18 between the ribbons of material F1, F2.

Adjacent contact ribs 14 identify a roller channel 16 in which the ribbons of material F1, F2 form an article-holder pocket 20 defined between transversal welding lines 18.

It follows that the transversal welding lines 18 are spaced in a longitudinal direction L, so as to merge the ribbons of material F1, F2 in discrete positions, and so as to create a plurality of article-holder pockets 20 along such a direction L.

It should be noted that in the present description, the term "longitudinal" means the prevailing development direction of at least one ribbon of material F1, F2. Preferably, the longitudinal direction L will be substantially oriented along at least one feed direction A1, A2. The term "transversal" means a direction incident or orthogonal to the feed direction A1, A2 in a certain point of the latter (e.g. where the articles are moved in superimposition to the drum surface).

Additionally, it is important to note that the roller channels 16 have transit sections that are large enough to allow the introduction of articles A therein, and thus into the article-holder pockets 20 formed at the contact ribs 14.

According to the invention, the feed drum 8, 8' comprises mobile push elements 22 to move articles A from the article seats 10 superposed respect to the drum surface 6 (and more precisely in the roller channels 16), at right angles to the feed direction A1, A2 of the above ribbons F1, F2.

In this way, through such a lateral insertion of articles A in the convergence space 70 between the ribbons of material F1, F2, this machine allows drastically reducing the distance between adjacent articles to be packaged, and making such a machine more compact and efficient.

According to one embodiment, moving articles A from the article seats 10 to the drum surface 6 occurs in a plane substantially parallel to such a surface 6, i.e. parallel to the surface of at least one F1 of the ribbons of material F1, F2.

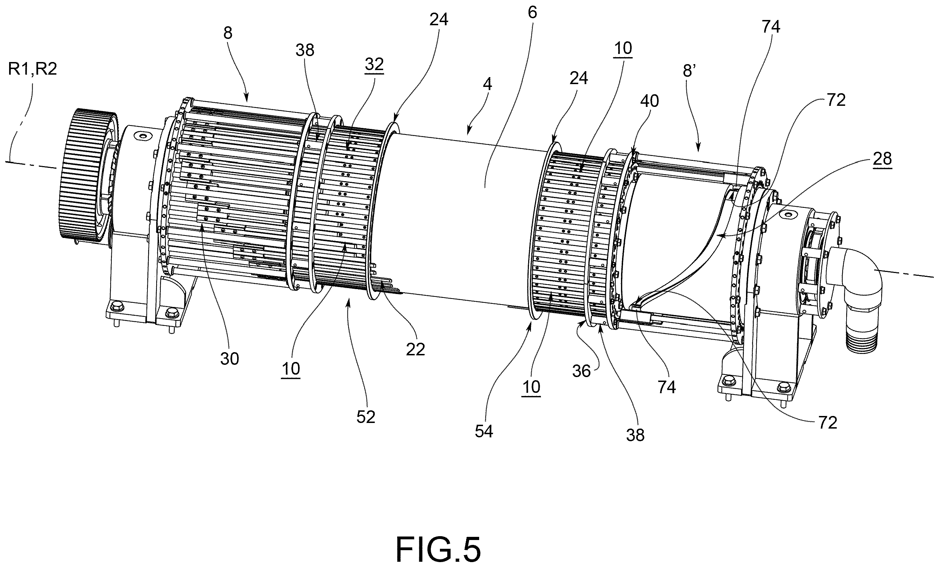

According to the embodiment shown in figure 5, the feed drum 8, 8' defines a cam path 28, which extends in the axial direction and circumferential around such a drum 8, 8' (with respect to axis R2) and which works on cam trackers 72 of the mobile push elements 22 to make them translate from a rearward (or rest) position to a forward (or push) position, and vice versa.

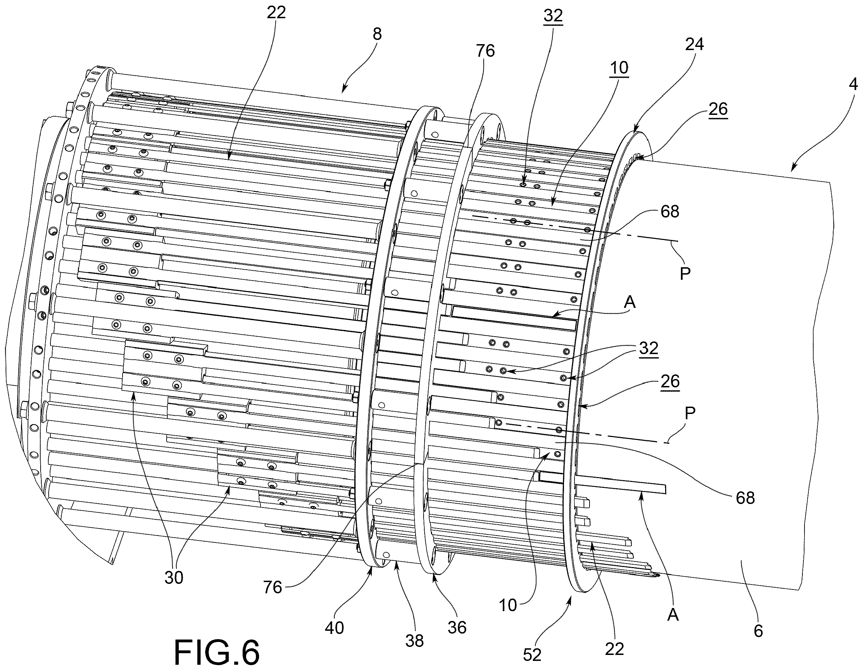

For example, with reference to the variant in figure 6, the mobile push elements 22 in the high part of the feed drum 8 are arranged in the rest position. In fact, by comparing the pattern shown in figure 5, in such a position the cam path 28 is spaced with respect to the coupling drum 4, so such elements 22 only develop at the feed drum 8, 8'.

The mobile push elements 22 at and below the middle of the drum in figure 6 are instead placed in progressively more advanced push positions. In fact, again with reference to figure 5, in this position the cam path 28 develops progressively towards the coupling drum 4, whereby such elements are gradually brought towards the drum surface 6 optionally up to protrude on the latter.

In the embodiment shown in figure 5, the cam path 28 is shaped as a groove. In this regard, the cam trackers 72 may be slidably fitted into such a groove, optionally interposing a rolling component 74 integral in translation with trackers 72.

For the variants comprising two feed drums 8, 8', the mobile push elements 22 are mutually opposed.

Optionally, machine 1 may comprise one or more movement carriages 30 connected so as to slide along the cam path 28, where each carriage 30 is joined to a single mobile push element 22 (variant not shown), or at least a pair of mobile push elements 22 so that the latter are moved substantially simultaneously between the above positions.

According to such a variant, the cam tracker 72 is advantageously connected to each movement carriage 30.

According to a further variant, the article seat 10 comprises a plurality of suction holes 32 distanced along the displacement path P of the mobile push elements 22 to retain articles A of any desired length and/or in any intermediate position of the mobile push elements 22.

According to an embodiment, the feed drum 8, 8' and the drum surface 6 of the coupling drum 4 are separated by a guide ring 24 defining crossing passages 26 for articles A, such as shown in figure 6.

For example, the crossing passages 26 define a transversal section shaped about complementary to the size of article A to be packaged.

Advantageously, the crossing passages 26 can be reversibly engaged by the mobile push elements 22.

According to another embodiment, the article seats 10 are defined on one side by the guide ring 24 (which, as said, separates the feed drum 8, 8' and the drum surface 6), and on the other side by a sizing ring 36 connected by spacers 38 to a support flange 40 of the feed drum 8, 8'.

Therefore, the axial distance between the guide ring 24 and the sizing ring 36 determines the maximum extension of the article seats 10.

In this regard, a preferred variant contemplates that the spacer elements 38 are replaceable (specifically: with other elements 38 of different lengths) to change the size or development of the article seats 10.

According to an advantageous variant, the guide ring 24 and/or the sizing ring 36 are made in sectors, so as to be disengageable from the feed drum 8, 8' in a radial direction in relation to the second rotation axis R2. For reference, the separating lines between sectors identified by reference numeral 76 in figure 6 should be seen.

According to another variant, machine 1 comprises at least a second welding roller 42 (specifically: rotatable around a fourth rotation axis R4) comprising one or more contact prominences 44 with the drum surface 6, to make one or more longitudinal welding lines 46 between the ribbons of material F1, F2, in order to close the article-holder pocket 20 at one or both pocket ends.

For example, the contact prominence 44 or the plurality of such prominences 44 could develop in a ring shape around the second welding roller 42.

According to one embodiment, the second welding roller 42 comprises a pair of contact prominences 44 to close the two pocket ends.

In the embodiment shown in figure 2, the second welding roller 42 comprises three contact prominences 44, axially spaced along the fourth rotation axis R4.

According to this variant, the contact prominence 44 arranged in intermediate or central position between the other two is in fact configured to create a longitudinal welding line 46 between two rows of side-by-side articles A, fed upstream by the pair of feed drums 8, 8'.

Optionally, the first 12 and/or the second 42 welding roller comprises heating means 48, 50, optional integrated, to heat the contact ribs 14 and/or the contact prominence 44 and thereby heat-weld the ribbons of material F1, F2.

For example, the sections in figure 2 and 3 show heating means 48, 50 in the form of an electrical resistance, the latter being optionally accommodated within the first 12 and/or the second 42 welding roller.

According to an embodiment, the first 12 and the second 42 welding roller are staggered along the circumference of the coupling drum 4, and are rotatable around axes of rotation R3, R4 preferably substantially parallel to the first rotation axis R1.

According to a further embodiment, downstream of the first welding roller 12 and optionally downstream of the second welding roller 42 in the feed direction A1, A2 of the ribbons of material F1, F2, machine 1 comprises longitudinal separation means 56, 58, 60 of the ribbons into at least two half-ribbons of packaged articles A (only one of which is shown in figure 2 or 3 due to the sectional views).

Optionally, the longitudinal separation means comprise a rotating blade 56 optionally idle, and an annular slit 60 of an idler roller 58 in which the rotatable blade 56 is partially inserted.

In figure 2 and 3, the rotatable blade 56 is shown at a distance from the idler roller 58 but, during the separation of the half-ribbons 78, such a blade 56 is of course accommodated into slit 60 contrary to what shown.

As regards the movement of the above components, the packaging machine 1 may comprise a single motor unit 62 to move, through optional geared motors, the feed drum 8, 8', the coupling drum 4, the first welding roller 12, the optional second welding roller 42, the optional idler roller 58 and at least one optional blade 64, 64' of an optional cross cutting unit 66 placed downstream of the first welding roller 12 in relation to the feed direction A1, A2 of the ribbons of material F1, F2.

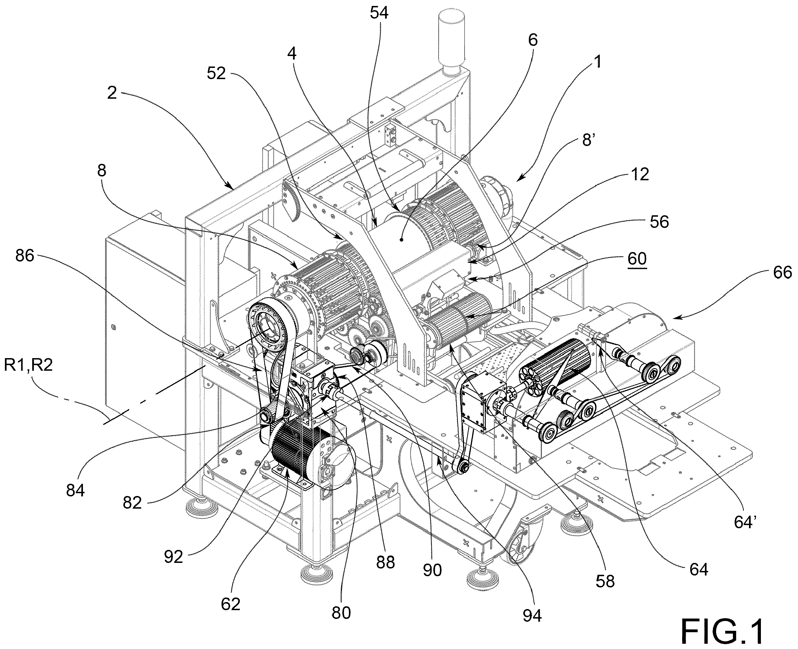

With reference to figure 1, the single motor unit 62 is advantageously connected - such as through a first belt transmission 84 - to a distributor unit 80 with three output shafts 82, 88, 92.

More precisely, a first output shaft 82 is connected to the coupling drum 4 and to the feed drum 8, 8' through a second belt transmission 86, a second output shaft 88 is connected at least to the first welding roller 12 and to the optional second welding roller 42 through a third belt transmission 90, while a third output shaft 92 is connected to the optional blade 64, 64' through an extension axis 94.

As regards the optional cross cutting unit 66, such units can be used to separate articles A entering therein in single packages, or in package strips having predetermined length.

The above objects are also achieved with the packaging method described hereinafter.

Since a preferred embodiment provides that such a method is implemented by using the packaging machine just described, such a method may comprise all the features that can be inferred - even if only implicitly - from the description above.

Such a method comprises the following sequential steps:
i) feeding ribbons of material F1, F2 along a feed direction A1, A2;
ii) making the ribbons of material F1, F2 converge;
iii) pushing some of a plurality of articles A to be packaged between the ribbons of material F1, F2 of step ii), perpendicular to the feed direction A1, A2;
iv) making transverse welding lines 18 between the ribbons of material F1, F2 to delimit article-holder pockets 20;
v) pushing the remainder of the articles A into the respective article-holder pockets 20;
vi) optionally making one or more longitudinal welding lines 46 between the ribbons of material F1, F2, in order to close the article-holder pockets 20 at one or both ends of the pocket.

Innovatively, the machine and the method object of the present invention allow overcoming the drawbacks of the prior art.

More specifically, the discussed lateral insertion of the articles allows increasing the number of articles fed per unit of time, as well as allow a reduction of the overall dimensions of the machine.

Advantageously, the machine object of the present invention allows firmly retaining the articles, irrespective of length thereof and/or the insertion step between the two ribbons.

Advantageously, the use of two drums side by side allows achieving package manufacturing speeds that are unimaginable with known systems.

Advantageously, the machine object of the present invention is designed to seal the articles quickly and reliably.

Advantageously, the machine object of the present invention is operable via a single motor unit whose power can be distributed to the various functional parts, possibly with appropriate reductions.

Advantageously, the machine object of the present invention allows guiding the articles in an extremely reliable and accurate manner, and releasing such articles only after the pocket has been completed.

Advantageously, the machine object of the present invention allows maximizing the number of push elements that can be used, despite the small diameter of the feed roller.

Advantageously, the cam system for the movement of the mobile push elements is extremely reliable, and allows cyclically repeating the insertions of articles between the ribbons.

Advantageously, the machine object of the present invention allows being modified with few operations, so as to cope with the packaging of articles of various types.

Advantageously, the machine object of the present invention can be used with different types of ribbons, at least one of which is thermo-weldable to achieve significant manufacturing speeds.

Advantageously, the machine object of the present invention has at least double productivity compared to traditional machines, as it allows working in parallel on different rows of articles.

Advantageously, the machine object of the present invention is designed to make always clean longitudinal cuts, due to the continuous renewal of the blade and/or the cutting depth discussed above.

A man skilled in the art may make several changes or replacements of elements with other functionally equivalent ones to the embodiments of the above machine and method in order to meet specific needs. Also such variants are included within the scope of protection as defined by the following claims.

Moreover, each variant described as belonging to a possible embodiment may be implemented independently of the other variants described.

## Claims

1. Packaging machine (1) comprising:
- a frame (2) and a coupling drum (4), mounted rotatable to said frame around a first rotation axis (R1) and defining a drum surface (6) on which ribbons of material (F1, F2) converge for the containment of articles (A) to be packaged;
- at least one feed drum (8, 8') of the coupling drum (4), revolving around a second rotation axis (R2) and defining article seats (10) to which the articles (A) are associable;
- a first welding roller (12), comprising contact ribs (14) with the surface of the drum (6), distributed around said roller (12) to make transverse welding lines (18) between the ribbons of material (F1, F2);
wherein adjacent contact ribs (14) identify a roller channel (16) in which the ribbons of material (F1, F2) form an article-holder pocket (20) defined between transversal welding lines (18);
the feed drum (8, 8') comprising mobile push elements (22) to move the articles (A) from the article seats (10) superposed respect to the drum surface (6) and in the roller channels (16), at right angles to a feed direction (A1, A2) of said ribbons (F1, F2).

2. Machine according to claim 1, wherein the first rotation axis (R1) and the second rotation axis (R2) are parallel and substantially coincide, and wherein the feed drum (8, 8') and the coupling drum (4) are integral in rotation.

3. Machine according to any of the preceding claims, wherein the feed drum (8, 8') and the drum surface(6) of the coupling drum (4) are separated by a guide ring (24) defining crossing passages (26) for the articles (A), said passages being reversibly engageable by the mobile push elements (22) .

4. Machine according to any of the preceding claims, wherein the feed drum (8, 8') defines a cam path (28), which extends in the axial direction and circumferential around said drum (8, 8') and which works on cam trackers (72) of the mobile push elements (22) to make them translate from a rearward to a forward position, and vice versa.

5. Machine according to the preceding claim, comprising one or more movement carriages (30) connected so as to slide along the cam path (28), each carriage (30) being joined to a single mobile push element (22), or at least a pair of mobile push elements (22) so that the latter are moved substantially simultaneously between said positions.

6. Machine according to any of the previous claims, comprising air-suction means which communicate with one or more article seats (10) through at least one suction hole (32) of said one or more seats, so as to retain the articles (A) by suction.

7. Machine according to the preceding claim, wherein the article seat (10) comprises a plurality of suction holes (32) distanced along the displacement path (P) of the mobile push elements (22) to retain articles (A) of any desired length and/or in any intermediate position of the mobile push elements (22).

8. Machine according to claim 6 or 7, wherein the air-suction means comprise an inner cavity of a rotating shaft (34) of the feed drum (8, 8') around the second rotation axis (R2).

9. Machine according to any of the preceding claims, wherein the article seats (10) are defined on one side by a guide ring (24) separating the feed drum (8, 8') and the drum surface (6) of the coupling drum (4), and on the other side by a sizing ring (36) connected by spacers (38) to a support flange (40) of the feed drum (8, 8'), said spacer elements (38) being replaceable to change the size of the article seats (10).

10. Machine according to the preceding claim or according to claim 4, wherein the guide ring (24) and/or the sizing ring (36) are made in sectors, so as to be disengageable from the feed drum (8, 8') in a radial direction in relation to the second rotation axis (R2).

11. Machine according to any of the preceding claims, comprising at least a second welding roller (42) comprising one or more contact prominences (44) with the drum surface(6), to make one or more longitudinal welding lines (46) between the ribbons of material (F1, F2), in order to close the article-holder pocket (20) at one or both pocket ends.

12. Machine according to any one of the claims 1 or 11, wherein the first (12) and/or the second (42) welding roller comprises heating means (48, 50), optional integrated, to heat the contact ribs (14) and/or the contact prominence (44) and thereby heat-weld the ribbons of material (F1, F2), and wherein the drum surface (6) is at least partially composed of silicone or natural or synthetic rubber.

13. Machine according to any of the claims 11 or 12, wherein the first (12) and the second (42) welding roller are staggered along the circumference of the coupling drum (4), and are rotatable around rotation axes (R3, R4) substantially parallel to the first rotation axis (R1).

14. Machine according to any of the preceding claims, comprising a pair of feed drums (8, 8') arranged at opposite axial ends (52, 54) of the coupling drum (4), wherein the mobile push elements (22) of said feed drums (8, 8') are mutually opposed.

15. Machine according to the preceding claim optionally when dependent on claim 11, wherein, downstream of the first welding roller (12) and optionally downstream of the second welding roller (42) in the feed direction (A1, A2) of the ribbons of material (F1, F2), said machine (1) comprises longitudinal separation means (56, 58, 60) of said ribbons into at least two half-ribbons of packaged articles (A).

16. Machine according to the preceding claim, wherein the longitudinal separation means comprise a rotating blade (56) optionally idle, and an annular slit (60) of an idler roller (58) in which the rotatable blade (56) is partially inserted.

17. Machine according to any of the preceding claims, comprising a single motor unit (62) to move, through optional geared motors, the feed drum (8, 8'), the coupling drum (4), the first welding roller (12), the optional second welding roller (42), the optional idler roller (58) and at least one blade (64, 64') of an optional cross cutting unit (66) placed downstream of the first welding roller (12) in relation to the feed direction (A1 , A2) of the ribbons of material (F1, F2).

18. Packaging method, for example implemented by the machine according to any of the preceding claims, comprising in sequence steps of:
i) feeding ribbons of material (F1, F2) in a feed direction (A1, A2);
ii) making the ribbons of material (F1, F2) converge;
iii) pushing some of a plurality of articles (A) to be packaged between the ribbons of material (F1, F2) of step ii), perpendicular to the feed direction (A1, A2);
iv) making transverse welding lines (18) between the ribbons of material (F1, F2) to delimit article-holder pockets (20);
v) pushing the remainder of the articles (A) into the respective article-holder pockets (20);
vi) optionally making one or more longitudinal welding lines (46) between the ribbons of material (F1, F2), in order to close the article-holder pockets (20) at one or both ends of the pocket.
